# EUROPÄISCHE PATENTSCHRIFT

(11) **EP 2 430 120 B1**
(45) Veröffentlichungstag und Bekanntmachung des Hinweises auf die Patenterteilung: **29.05.2013**
(21) Anmeldenummer: 10708911.2
(22) Anmeldetag: 25.02.2010
(51) Int. Cl.: C09K 19/52, C09D 7/12, C09D 167/08, C09D 5/36, C08K 3/08, C08K 3/22, C08K 9/04, C08K 3/00

(54) **EFFEKTWASSERBASISLACKE MIT VERBESSERTEN OPTISCHEN EIGENSCHAFTEN**
WATERBORNE EFFECT BASE COATS HAVING IMPROVED OPTICAL PROPERTIES
PEINTURES D'APPRÊT À EFFET À BASE D'EAU PRÉSENTANT DES PROPRIÉTÉS OPTIQUES AMÉLIORÉES

(30) Priorität: 13.05.2009 DE 102009021071
(43) Veröffentlichungstag der Anmeldung: 21.03.2012
(73) Patentinhaber: BASF Coatings GmbH, 48165 Münster (DE); Université Blaise Pascal, 63000 Clermont-Ferrand (FR)
(72) Erfinder: HINTZE-BRÜNING, Horst, 48165 Münster (DE); STEINER, Hans-Peter, 48324 Sendenhorst (DE); LEROUX, Fabrice, F-63670 Les Cendre (FR); TROUTIER-THUILLIEZ, Anne-Lise, FR/ 63670 Roche Blanche (FR); STIMPFLING, Thomas, F-63000 Clermont-Ferrand (FR)
(86) Internationale Anmeldenummer: PCT/EP2010/001159
(87) Internationale Veröffentlichungsnummer: WO 2010/130308

(56) Entgegenhaltungen:
- EP-A1- 0 357 844
- EP-A1- 1 371 683
- EP-A1- 1 840 113
- WO-A1-01/02457
- WO-A1-95/29961
- DE-A1- 4 418 490
- HINTZE-BRUENING H ET AL: "Layered particle-based polymer composites for coatings: Part II-Stone chip resistant automotive coatings" PROGRESS IN ORGANIC COATINGS, ELSEVIER BV, NL LNKD- DOI:10.1016/J.PORGCOAT.2008.09.020, Bd. 64, Nr. 2-3, 1. Februar 2009 (2009-02-01), Seiten 193-204, XP025884318 ISSN: 0300-9440 [gefunden am 2008-11-22]
- TROUTIER-THUILLIEZ A L ET AL: "Layered particle-based polymer composites for coatings: Part I. Evaluation of layered double hydroxides" PROGRESS IN ORGANIC COATINGS, ELSEVIER BV, NL LNKD- DOI:10.1016/J.PORGCOAT.2008.09.021, Bd. 64, Nr. 2-3, 1. Februar 2009 (2009-02-01), Seiten 182-192, XP025884317 ISSN: 0300-9440 [gefunden am 2008-11-20]

## Beschreibung

Für wäßrige Beschichtungsmittel, die besonders aufgrund ihrer verbesserten ökologischen Eigenschaften einen permanent zunehmenden Anteil am Beschichtungsmittelmarkt aufweisen, sind Additive auf Basis anorganischer Schichtkomposite zur Verbesserung der rheologischen Eigenschaften von hohem Interesse.
Insbesondere bei der Herstellung von Mehrschichtlackierungen für die Automobil(OEM)-Serienlackierung sind anorganische Schichtkomposite, wie beispielsweise Tonmineralien, wie insbesondere natürlich vorkommende Smectit-Typen, wie beispielsweise Montmorillonit, Saponit oder Hectorit, oder synthetisch hergestellte Smectit-Typen, wie beispielsweise Laponite, für die Einstellung der Rheologie der farbgebenden wäßrigen Basislacke von hoher Bedeutung. Die vorgenannten Mineralien weisen eine negative Oberflächenladung sowie eine positive Kantenladung auf, welche die Einstellung der Rheologie der Basislacke, insbesondere bei Applikationsmethoden, bei denen eine hohe Scherbeanspruchung der Basislacke auftritt, positiv beeinflusst. Allerdings neigen wäßrige Lacke enthaltend vorgenannte Mineralien zur Gelbildung, was die Verarbeitbarkeit der wäßrigen Basislacke beeinträchtigen kann oder bei gegebener Verarbeitbarkeit den Gehalt an nichtflüchtigem Material im wäßrigen Basislack limitiert.

Sind in den wäßrigen Basislacken Effektpigmente, inbesondere anisotrope Effektpigmente vorhanden, wie beispielsweise Aluminiumflakes oder Mica-Pigmente, so ist der Einsatz der oben angeführten Mineralien kritisch, da oftmals Beeinträchtigungen des Metallic-Effekts, insbesondere beim Flop-Verhalten sowie bei der Helligkeit und der Wolkenbildung, das heißt bei der Ausbildung von Hell-Dunkel-Schattierungen, bei den eingebrannten Lackschichten auftreten.

In WO-A-02/053658 werden Laponite-haltige effektpigmenthaltige Wasserbasislacke (im folgenden Effektwasserbasislacke) beschrieben, die zur Verhinderung der Wolkenbildung ein Gemisch aus mindestens zwei neutralisierten Fettsäuren enthalten. Obwohl die in WO-A-02/053658 beschriebenen Effektwasserbasislacke schon ausgezeichnete Eigenschaften aufweisen, besteht das Bedürfnis, insbesondere bei Metallic-Effektwasserbasislacken, gute rheologische Eigenschaften und herausragenden optischen Eigenschaften mit hohen Anteilen an nichtflüchtigem Material (Festkörper) optimal zu kombinieren. Hierbei ist insbesondere die Kombination eines hervorragenden Metallic-Effekts (Flop) mit einer hohen Helligkeit (hoher Anteil an reflektiertem Lichts und geringer Anteil an diffus gestreutem Licht) von Bedeutung.

In WO-A-2007/065861 werden gemischte Hydroxide, insbesondere Hydrotalcit-Typen, beschrieben, die mindestens 2 organische Anionen mit mindestens 8 Kohlenstoffatomen als Gegenionen aufweisen, wobei die Anionen weitere funktionelle Gruppen, beispielsweise Hydroxyl-, Amino oder Epoxidgruppen aufweisen können. Der Einsatz der solchermaßen modifizierten hydrophoben Hydrotalcite sind als interkalierbare Füllstoffe für Polymerisate, insbesondere für gummiartige Polymerisate beschrieben, Der Einsatz der Hydrotalcite in Beschichtungsmitteln ist in WO-A-2007/065861 allgemein beschrieben. Die hydrophoben Hydrotalcite sind nur bedingt für den Einsatz in wäßrigen Beschichtungsmitteln für OEM-Schichtaufbauten geeignet, da sie mit den vorzugsweise wasserdispergierbaren Bindemitteln auf molekularer Ebene schlecht verträglich sind. Eine Verwendung der Beschichtungsmittel zur Verbesserung der optischen Eigenschaften, insbesondere die Erzeugung eines hervorragenden Metallic-Effekts (Flop) mit einer hohen Helligkeit bei Effektwasserbasislacken, ist in WO-A-2007/065861 nicht beschrieben.

### Aufgabe und Lösung

Im Lichte des Standes der Technik resultiert als Aufgabe für die vorliegende Erfindung die Bereitstellung von Effektwasserbasislacken mit hohem Anteil an nichtflüchtigen Bestandteilen, die inbesondere als Basislackschicht in einem Lackaufbau der Automobilserienlackierung einen ausgezeichneten Metallic-Effekt (Flop) kombiniert mit einer hohen Helligkeit aufweisen.
Überraschenderweise wurden Effektwasserbasislacke gemäß Anspruch 1 gefunden, welche diese Aufgaben lösen und welche flüssigkristalline wäßrige Zubereitungen (WZ) in Anteilen von 1 bis 99 Gew.-%, bezogen auf den Wasserbasislack, und mindestens ein Effektpigment enthalten, welche diese Aufgabe lösen, wobei die flüssigkristallinen wäßrigen Zubereitungen (WZ) 10 bis 99,9 Gew.-%, bezogen auf die nichtflüchtigen Anteile von (WZ), mindestens eines wasserdispergierbaren Polyesters (PES), bei dessen Herstellung in Anteilen von 7 bis 50 mol-%, bezogen auf die Gesamtheit der Polyesterbausteine, difunktionelle Monomereinheiten (DME) mit aliphatischen Spacergruppen (SP) von 12 bis 70 Kohlenstoffatomen zwischen den funktionellen Gruppen (Gr) eingesetzt werden, sowie 0,1 bis 30 Gew.-%, bezogen auf die nichtflüchtigen Anteile von (WZ), positiv geladener schichtförmiger anorganischer Teilchen (AT), deren nicht weiter interkalierbare Einzelschichten ein Verhältnis D/d des mittleren Schichtdurchmessers (D) zur mittleren Schichtdicke (d) > 50 aufweisen und deren Ladung zumindestens teilweise mit einfach geladenen organischen Anionen (OA) kompensiert wird, enthalten. Das erfindungsgemäße wäßrige Beschichtungsmittel enthält als weiteren Bestandteil mindestens ein filmbildendes vorzugsweise wasserdispergierbares Polymerisat (FP), bevorzugt ein wasserdispergierbares Polyurethan (PUR), welches besonders bevorzugt mindestens einen wasserdispergierbaren Polyesterbaustein (PESB) mit difunktionellen Monomereinheiten (DME) enthält.

### Beschreibung der Erfindung

### Die flüssigkristalline wäßrige Zubereitung (WZ)

Der erfindungsgemäße Effektwasserbasislack enthält die flüssigkristalline wäßrige Zubereitung (WZ) in Anteilen von 1 bis 99 Gew.-%, bevorzugt 5 bis 95 Gew.-%, bezogen auf den Effektwasserbasislack.
Die flüssigkristalline wäßrige Zubereitung (WZ) enthält 10 bis 99,9 Gew.-%, bevorzugt von 15 bis 95 Gew.-%, bezogen auf die nichtflüchtigen Anteile von (WZ), mindestens eines wasserdispergierbaren Polyesters (PES), bei dessen Herstellung in Anteilen von 7 bis 50 mol-%, bezogen auf die Gesamtheit der Polyesterbausteine, difunktionelle Monomereinheiten (DME) mit aliphatischen Spacergruppen (SP) von 12 bis 70 Kohlenstoffatomen zwischen den funktionellen Gruppen (Gr) eingesetzt werden, sowie 0,1 bis 30 Gew.-%, bevorzugt zwischen 1 und 20 Gew.%, bezogen auf die nichtflüchtigen Anteile von (WZ), fester oder vorzugsweise in einer Suspension vorliegender positiv geladener schichtförmiger anorganischer Teilchen (AT), deren nicht weiter interkalierbare Einzelschichten ein Verhältnis D/d des mittleren Schichtdurchmessers (D) zur mittleren Schichtdicke (d) > 50 aufweisen und deren Ladung zumindestens teilweise mit einfach geladenen organischen Anionen (OA) kompensiert wird.

### Der wasserdispergierbare Polyester (PES)

Die flüssigkristalline wäßrige Zubereitung (WZ) enthält 10 bis 99,9 Gew.-%, bevorzugt von 15 bis 95 Gew.-%,bezogen auf die nichtflüchtigen Anteile von (WZ), mindestens eines wasserdispergierbaren Polyesters (PES), bei dessen Herstellung in Anteilen von 7 bis 50 mol-%, bezogen auf die Gesamtheit der Polyesterbausteine, difunktionelle Monomereinheiten (DME) mit aliphatischen Spacergruppen (SP) von 12 bis 70 Kohlenstoffatomen zwischen den funktionellen Gruppen (Gr) eingesetzt werden.

Im Sinne der Erfindung wasserdispergierbar bedeutet, daß die Polyester (PES) in der wäßrigen Phase Aggregate mit einem mittleren Teilchendurchmesser von < 500, bevorzugt < 200 und besonders bevorzugt < 100 nm ausbilden, beziehungsweise molekular gelöst sind. Die Größe der Aggregate bestehend aus den Polyestern (PES) kann in an sich bekannter Weise durch Einführung von hydrophilen Gruppen am Polyester (PES) gesteuert werden. In die wasserdispergierbaren Polyester (PES) sind die vorzugsweise zur Anionenbildung befähigte Gruppen eingebaut, welche nach ihrer Neutralisation dafür sorgen, daß die Polyester (PES) in Wasser stabil dispergiert werden können. Geeignete zur Anionenbildung befähigte Gruppen sind vorzugsweise Carbonsäuregruppen. Zur Neutralisation der zur Anionenbildung befähigten Gruppen werden bevorzugt ebenfalls Ammoniak, Amine und/oder Aminoalkohole eingesetzt, wie beispielsweise Di- und Triethylamin, Dimethylaminoethanolamin, Diisopropanolamin, Morpholine und/oder N-Alkylmorpholine.
Die wasserdispergierbaren Polyester (PES) weisen vorzugsweise massenmittlere Molekulargewichte Mw (bestimmt mittels Gelpermeationschromatographie nach den Normen DIN 55672-1 bis -3 mit Polystyrol als Standard) von 1.000 bis 100.000 Dalton, besonders bevorzugt von 1.500 bis 50.000 Dalton auf.

Die difunktionellen Monomereinheiten (DME) der erfindungsgemäßen Polyester weisen aliphatische Spacergruppen (SP) mit 12 bis 70 Kohlenstoffatomen zwischen den funktionellen Gruppen (Gr) auf.
Bevorzugte aliphatische Spacergruppen (SP) weisen 15 bis 60, ganz besonders bevorzugt 18 bis 50 Kohlenstoffatome auf. Weiterhin können die Spacergruppen (SP) cylcoaliphatische oder aromatische Struktureinheiten mit 4 bis 12 Kohlenstoffatomen, ethylenisch ungesättigte Struktureinheiten in Anteilen von bis zu 30 mol-%, bevorzugt von bis zu 25 mol-%, besonders bevorzugt von bis zu 20 mol-%, bezogen auf die Gesamtheit der Kohlenstoffatome, sowie Heteroatome, wie bevorzugt Sauerstoff, Schwefel und/oder Stickstoff enthalten.
Bevorzugte funktionelle Gruppen (Gr) der Monomereinheiten (DME) sind Hydroxyl- und/oder Carbonsäuregruppen beziehungsweise Carbonsäureanhydridgruppen. Monomereinheiten mit jeweils 2 Hydroxylgruppen oder 2 Carbonsäuregruppen sind besonders bevorzugt.
Als Monomereinheiten (DME) werden bevorzugt Diole und/oder Dicarbonsäuren beziehungsweise deren Anhydride mit Spacergruppen (SP) von 12 bis 70, bevorzugt 15 bis 60, besonders bevorzugt von 18 bis 50 Kohlenstoffatomen eingesetzt.
Ganz besonders bevorzugt als Monomereinheiten (DME) sind dimere Fettalkohole und/oder dimere olefinisch ungesättigte Fettsäuren und/oder deren hydrierte Derivate, die den vorgenannten Kriterien genügen, wie insbesondere dimere Fettsäuren der Pripol®-Serie der Fa. Unichema.
Die Monomereinheiten (DME) werden in Anteilen von 7 bis 50 mol-%, bevorzugt von 8 bis 45 mol-%, besonders bevorzugt von 9 bis 40 mol-%, bezogen auf die Gesamtheit der Bausteine des wasserdispergierbaren Polyesters (PES) eingesetzt.

Als weitere Bausteine enthält der wasserdispergierbare Polyester (PES) bevorzugt folgende Monomereinheiten (MEn):
- in Anteilen von 1 bis 40 mol-%, bevorzugt von 2 bis 35 mol-%, besonders bevorzugt von 5 bis 30 mol-%, bezogen auf die Gesamtheit der Bausteine des wasserdispergierbaren Polyesters, unverzweigte aliphatische und/oder cycloaliphatische Diole (ME1) mit 2 bis 12 Kohlenstoffatomen, wie insbesondere Ethylenglykol, Diethylenglykol, 1,3-Propandiol, Dipropylenglykol, 1,4-Butandiol, 1,6-Hexandiol,1,4-Cyclohexandiol und/oder 1,4-Dimethylolcyclohexan, besonders bevorzugt 1,4-Butandiol und/oder 1,6-Hexandiol. Unverzweigt in Sinne der Erfindung bedeutet, daß die aliphatischen und/oder cycloaliphatischen Kohlenstoffeinheiten keine weiteren aliphatischen Substituenten aufweisen.
- in Anteilen von 1 bis 50 mol-%, bevorzugt von 2 bis 40 mol-%, besonders bevorzugt von 5 bis 35 mol-%, bezogen auf die Gesamtheit der Bausteine des wasserdispergierbaren Polyesters, verzweigte aliphatische und/oder cycloaliphatische Diole (ME2) mit 4 bis 12 Kohlenstoffatomen, wie insbesondere Neopentylglykol, 2-Methyl-2-propylpropandiol, 2-Ethyl-2-butylpropandiol, 2,2,4,-Trimethyl-1,5-pentandiol, 2,2,5-Trimethyl-1,6-hexandiol, besonders bevorzugt Neopentylglykol. Verzweigt in Sinne der Erfindung bedeutet, daß die aliphatischen und/oder cycloaliphatischen Kohlenstoffeinheiten weitere aliphatische Substituenten aufweisen,
- gegebenenfalls in Anteilen von 0 bis 30 mol-%, bevorzugt von 2 bis 25 mol-%, besonders bevorzugt von 5 bis 20 mol-%, bezogen auf die Gesamtheit der Bausteine des wasserdispergierbaren Polyesters, aliphatische, cycloaliphatische und/oder aromatische Dicarbonsäuren (ME3) mit 4 bis 12 Kohlenstoffatomen, wie insbesondere Oxalsäure, Malonsäure, Bernsteinsäure, Glutarsäure, Adipinsäure, Sebacinsäure, Maleinsäure, Fumarsäure, Isophthalsäure, Terephthalsäure, Orthophthalsäure, Tetrahydrophthalsäure, Hexahydrophthalsäue, 1,2-Cyclohexandisäure, 1,4-Cyclohexandisäure beziehungsweise deren Anhydride, besonders bevorzugt 1,2-Cyclohexandisäure, sowie
- gegebenenfalls in Anteilen von 0 bis 40 mol-%, bevorzugt von 0 bis 35 mol-%, besonders bevorzugt von 0 bis 30 mol-%, bezogen auf die Gesamtheit der Bausteine des wasserdispergierbaren Polyesters, aliphatische, cycloaliphatische und/oder aromatische Polycarbonsäuren (ME4) mit mindestens 3 Carbonsäuregruppen, wie insbesondere Benzoltricarbonsäuren, wie Benzol-1,2,4-tricarbonsäure und Benzol-1,3,5-tricarbonsäure, Trimellithsäure, Pyromellithsäure, Gycerinsäure, Äpfelsäure beziehungsweise deren Anhydride, besonders bevorzugt Benzoltricarbonsäuren, wie Benzol-1,2,4-tricarbonsäure und Benzol-1,3,5-tricarbonsäure.

Die Umsetzung der Monomereinheiten (DME), (ME1), (ME2), sowie gegebenenfalls (ME3) und (ME4) erfolgt nach den allgemein gut bekannten Methoden der Polyesterchemie. Die Reaktionstemperatur liegt bevorzugt bei 140 bis 240 Grad C, bevorzugt bei 150 bis 200 Grad C. In bestimmten Fällen ist es zweckmäßig die Veresterungsreaktion zu katalysieren, wobei als Katalysatoren beispielsweise Tetraalkyltitanate, Zink- beziehungsweise Zinnalkoxylate, Dialkylzinnoxide oder organische Salze der Dialkylzinnoxide zum Einsatz kommen.
In der bevorzugten Ausführungsform der Erfindung werden zunächst in einer ersten Stufe die Monomereinheiten (DME), (ME1), (ME2) und gegebenenfalls (ME3) gegebenenfalls in einem geeigneten Lösemittel miteinander zu einem Poyesterpolyol, welches per se als erfindungsgemäßer wäßriger Polyester (PES) eingesetzt werden kann, umgesetzt, wobei das molare Verhältnis der Summe aller Diole (ME1), (ME2) und gegebenenfalls (DME) zur Summe aller Dicarbonsäuren (ME3) und gegebenenfalls (DME) zwischen 3,5:1 und 1,5:1, bevorzugt zwischen 3:1 und 1,75:1 und besonders bevorzugt zwischen 2,5:1 und 2:1 liegt, bevor gegebenenfalls in einer zweiten Stufe das Polyesterpolyol mit den Monomereinheiten (ME4) zum erfindungsgemäßen wasserdispergierbaren Polyester (PES) umgesetzt wird. Die Säurezahl der wasserdispergierbaren Polyester (PES) nach DIN EN ISO 3682 liegt vorzugsweise zwischen 10 und 80 mg KOH/g, besonders bevorzugt zwischen 20 und 60 mg KOH/g nichtflüchtigem Anteil.

In einer weiteren Ausführungsform der Erfindung tragen die wasserdispergierbaren Polyester (PES) vernetzbare funktionelle Gruppen (a), wobei prinzipiell alle Gruppen geeignet sind, die mit sich selbst und/oder mit weiteren funktionellen Gruppen des Polyesters (PES) und/oder mit weiteren Bestandteilen der erfindungsgemäßen Effektwasserbasislacken, insbesondere mit Vernetzungsmitteln (V), unter Ausbildung kovalenter Bindungen reagieren können. Solche Gruppen werden über die schon genannten Monomerbausteine (DME) und/oder (MEn) oder über weitere Bausteine, die solche Gruppen aufweisen, eingeführt.
Beispielhaft für mit sich selbst reagierende Gruppen (a) seien genannt: Methylol-, Methylolether-, N-Alkoxymethylamino- und insbesondere Alkoxysilylgruppen. Insbesondere Hydroxyl-, Amino- und/oder Epoxygruppen sind als Gruppen (a) bevorzugt. Besonders bevorzugt sind Hydroxylgruppen, wobei die Hydroxylzahl des wasserdispergierbaren Polyesters (PES) nach DIN EN ISO 4629 vorzugsweise zwischen 10 und 500, bevorzugt zwischen 20 und 200 KOH/g nichtflüchtigem Anteil.beträgt.

### Die anorganischen Teilchen (AT)

In der flüssigkristallinen wäßrigen Zubereitung (WZ) sind 0,1 bis 30 Gew.-%, bevorzugt zwischen 1 und 20 Gew.-%, bezogen auf die nichtflüchtigen Anteile von (WZ), fester oder vorzugsweise in einer Suspension vorliegender positiv geladener schichtförmiger anorganischer Teilchen (AT), deren nicht weiter interkalierbare Einzelschichten ein Verhältnis D/d des mittleren Schichtdurchmessers (D) zur mittleren Schichtdicke (d) > 50 aufweisen und deren Ladung zumindestens teilweise mit einfach geladenen organischen Anionen (OA) kompensiert wird, enthalten. Die mittleren Schichtdurchmesser (D) können über die Auswertung von REM (RasterElektronenmikroskop)-Aufnahmen ermittelt werden, während die Schichtdicken (d) experimentell über die Röntgenstrukturanalyse, Profilmessungen mittels AFM (Atomic Force Microscopy) an Einzelplättchen sowie rechnerisch in Kenntnis des molekularen Aufbaus ermittelt werden. Der mittlere Schichtdurchmesser (D) der positiv geladenen anorganischen Teilchen (AT) beträgt vorzugsweise zwischen 100 und 1000 nm, besonders bevorzugt zwischen 200 und 500 nm, die mittlere Schichtdicke (d) beträgt vorzugsweise weniger als 1,0 nm, besonders vorzugsweise weniger als 0,75 nm.

Die Herstellung der positiv geladenen anorganischen Teilchen (AT) kann durch Austausch der natürlich vorhandenen beziehungsweise der synthesebedingten Gegenionen (A) der schichtförmigen Mineralien gegen die einfach geladenen organischen Anionen (OA) nach an sich bekannten Verfahren oder durch Synthese in Gegenwart der einfach geladenen organischen Anionen (OA) erfolgen. Dazu werden beispielsweise die positiv geladenen anorganischen Teilchen (AT) in einem geeigneten flüssigen Medium, welches in der Lage ist, die Zwischenräume zwischen den einzelnen Schichten zu quellen und in dem sich die organischen Anionen (OA) gelöst befinden, suspendiert und anschließend wieder isoliert (Langmuir 21 (2005), 8675).
Beim Ionenaustausch werden vorzugsweise mehr als 15 mol-%, besonders bevorzugt mehr als 30 mol-%, der synthesebedingten Gegenionen (A) durch die einfach geladenen organischen Anionen (OA) ersetzt. In Abhängigkeit von der Größe und der räumlichen Orientierung der organischen Gegenionen werden die Schichtstrukturen in der Regel aufgeweitet, wobei der Abstand zwischen den elektrisch geladenen Schichten vorzugsweise um mindestens 0,2 nm, bevorzugt um mindestens 0,5 nm, aufgeweitet wird.

Erfindungsgemäß bevorzugt sind schichtförmige positiv geladene anorganische Teilchen (AT), wie insbesondere die gemischten Hydroxide der Formel: (M₍₁₋ₓ)²⁺Mₓ³⁺(OH)₂)(A_{x/y}^{y-})·nH₂O
wobei M²⁺ zweiwertige Kationen, M³⁺ dreiwertige Kationen und als Gegenionen Anionen (A) mit einer Wertigkeit y darstellen, wobei x einen Wert von 0,05 bis 0,5 einnimmt, und ein Teil der Gegenionen (A) durch die einfach geladenen organischen Anionen (OA) ersetzt ist.
Besonders bevorzugt sind als zweiwertige Kationen M²⁺ Calcium-, Zink-und/oder Magnesiumionen, als dreiwertige Kationen M3⁺ Aluminiumionen und als Anionen (A) Phosphationen, Sulfationen und/oder Carbonationen, weil diese Ionen weitestgehend gewährleisten, daß keine Veränderung des Farbtons beim Aushärten der erfindungsgemäßen Schicht auftritt. Die Synthese der gemischten Hydroxide ist bekannt (beispielsweise Eilji Kanezaki, Preparation of Layered Double Hydroxides in Interface Science and Technology, Vol1, Chapter 12, page 345ff - Elsevier, 2004, ISBN 0-12-088439-9). Sie erfolgt meist aus den Mischungen der Salze der Kationen in wäßriger Phase bei definierten, konstant gehaltenen basischen pH-Werten. Man erhält die gemischten Hydroxide, enthaltend die Anionen der Metallsalze als in den Zwischenräumen eingelagerte anorganische Gegenionen (A). Erfolgt die Synthese in Gegenwart von Kohlendioxid , erhält man in der Regel das gemischte Hydroxid mit eingelagerten Carbonationen (A). Führt man die Synthese unter Ausschluss von Kohlendioxid beziehungsweise Carbonat in Anwesenheit einfach geladener organischer Anionen (OA) oder deren sauren Vorstufen durch, erhält man in der Regel das gemischte Hydroxid mit in den Zwischenräumen eingelagerten organischen Anionen (OA) (coprecipitation method oder Templatmethode). Eine alternative Syntheseroute zur Herstellung der gemischten Hydroxide besteht in der Hydrolyse der Metallalkoholate in Gegenwart der gewünschten, einzulagernden Anionen (US-A-6,514,473). Weiterhin ist es möglich, die einzulagernden einfach geladenen organischen Anionen (OA) durch Ionenaustausch an gemischten Hydroxiden mit eingelagerten Carbonationen (A) einzubringen. Dieses kann beispielsweise durch Rehydratisierung des amorphen calcinierten gemischten Oxids in Gegenwart der gewünschten einzulagernden Anionen (OA) erfolgen. Die Calcinierung des gemischten Hydroxids, enthaltend eingelagerte Carbonationen (A), bei Temperaturen < 800°C liefert das amorphe gemischtes Oxid unter Erhalt der Schichtstrukturen (rehydration method).
Alternativ kann der Ionenaustausch in wäßrigem oder alkoholisch wäßrigem Medium in Gegenwart der sauren Vorstufen der einzulagernden organischen Anionen erfolgen. Dabei ist je nach Säurestärke der Vorstufe der einzulagernden einfach geladenen organischen Anionen (OA) eine Behandlung mit verdünnten Mineralsäuren notwendig, um die Carbonationen (A) zu entfernen.

Die zur zumindest teilweisen Kompensation der Ladung und zur Aufweitung der vorgenannten gemischten Hydroxide verwendeten einfach geladenen organischen Anionen (OA) weisen als Ladungsträger anionische Gruppen (AG) auf, wie besonders bevorzugt einfach geladene Anionen der Carbonsäure, der Sulfonsäure und/oder der Phosphonsäure. Die einfach geladenen organischen Anionen (OA) weisen bevorzugt Molekulargewichte von < 1.000 Dalton, besonders bevorzugt < 500 Dalton auf.
In einer weiteren Ausführungsform der Erfindung tragen die einfach geladenen organischen Anionen (OA) zusätzlich funktionelle Gruppen (c), welche gegebenenfalls mit funktionellen Gruppen (a) des Polymerisats (FP) beim Aushärten des Beschichtungsmittel unter Ausbildung kovalenter Bindungen reagieren. Besonders bevorzugt sind die funktionellen Gruppen (c) ausgewählt aus der Gruppe Hydroxyl-, Epoxy- und/oder Aminogruppen.
Die funktionellen Gruppen (c) sind von den anionischen Gruppen (AG) der einfach geladenen organischen Anionen (OA) vorzugsweise durch einen Spacer getrennt, wobei der Spacer ausgewählt ist aus der Gruppe der gegebenenfalls mit Heteroatomen, wie Stickstoff, Sauerstoff und/oder Schwefel, modifizierten und gegebenenfalls substituierten Aliphaten und/oder Cycloaliphaten mit insgesamt 2 bis 30 Kohlenstoffatomen, bevorzugt zwischen 3 und 20 Kohlenstoffatomen, der gegebenenfalls mit Heteroatomen, wie Stickstoff, Sauerstoff und/oder Schwefel, modifizierten und gegebenenfalls substituierten Aromaten mit insgesamt 2 bis 20 Kohlenstoffatomen, bevorzugt zwischen 3 und 18 Kohlenstoffatomen, und/oder der Teilstrukturen der oben angeführten Cycloaliphaten und Aromaten, wobei sich in den Teilstrukturen insbesondere mindestens 3 Kohlenstoffatome und/oder Heteroatome zwischen der funktionellen Gruppe (c) und der anionischen Gruppe (AG) befinden.

Besonders bevorzugt sind die Spacer der einfach geladenen organischen Anionen (OA) gegebenenfalls substituierte Phenyl- oder Cyclohexylreste, welche die funktionelle Gruppe (c) in m- oder p-Stellung zur anionischen Gruppe (AG) aufweisen. Insbesondere werden hierbei als funktionelle Gruppe (c) Hydroxyl- und/oder Aminogruppen und als anionische Gruppe (AG) Carboxylat- und/oder Sulfonatgruppen eingesetzt. In einer weiteren Ausführungsform der Erfindung weisen die organischen Anionen (OA) mindestens zwei der oben angeführten funktionellen Gruppen (c) auf.
Ganz besonders bevorzugt sind als einfach geladene organische Anionen (OA) mit einer funktionellen Gruppe (c):
m- oder p-Aminobenzolsulfonat, m- oder p-Hydroxybenzolsulfonat, m- oder p-Aminobenzoat und/oder m- oder p-Hydroxybenzoat,
beziehungsweise als einfach geladene organische Anionen (OA) mit zwei funktionellen Gruppen (c):
3-Hydroxy-4-Aminobenzolsulfonat, 3-Amino-4-Hydroxybenzolsulfonat, 3-Hydroxy-4-Aminobenzolbenzoat und/oder 3-Amino-4-Hydroxybenzoat,

Bei den oben genannten besonders bevorzugten gemischten Hydroxiden, die synthesebedingt bevorzugt Carbonat als Anion (A) enthalten, werden beim Ionenaustausch vorzugsweise mehr als 15 mol-%, besonders bevorzugt mehr als 30 mol-%, der Anionen (A) durch die einfach geladenen organischen Anionen (OA) ersetzt.
Bevorzugt wird die Modifikation der kationisch geladenen anorganischen Teilchen (AT) in einem separaten Verfahren vor der Einarbeitung in das erfindungsgemäße Beschichtungsmittel durchgeführt, wobei dieses Verfahren besonders bevorzugt im wäßrigen Medium durchgeführt wird. Bevorzugt werden die mit den einfach geladenen organischen Anionen (OA) modifizierten elektrisch geladenen anorganischen Teilchen (AT) in einem Syntheseschritt hergestellt. Die solchermaßen hergestellte Teilchen haben nur eine sehr geringe Eigenfarbe, sie sind vorzugsweise farblos.
Die mit einfach geladenen organischen Anionen (OA) modifizierten positiv geladenen Teilchen (AT) können in einem Syntheseschritt insbesondere aus den Metallsalzen der Kationen und den organischen Anionen hergestellt werden Dabei wird vorzugsweise in eine wäßrige alkalische Lösung des einfach geladenen organischen Anions (OA) eine wäßrige Mischung von Salzen der zweiwertigen Kationen M²⁺ und der dreiwertigen Kationen M3⁺ eingetragen, bis die gewünschte Stöchiometrie eingestellt ist. Die Zugabe erfolgt vorzugsweise in CO₂-freier Atmosphäre, vorzugsweise unter Inertgasatmosphäre, beispielsweise unter Stickstoff, unter Rühren bei Temperaturen zwischen 10 und 100 Grad C, bevorzugt bei Raumtemperatur, wobei der pH-Wert der wäßrigen Reaktionsmischung, vorzugsweise durch Zugabe alkalischer Hydroxide, bevorzugt NaOH, im Bereich von 8 bis 12, bevorzugt zwischen 9 und 11 gehalten wird. Nach Zugabe der wäßrigen Mischung der Metallsalze wird die resultierende Suspension bei den vorgenannten Temperaturen während eines Zeitraums von 0,1 bis 10 Tagen, vorzugsweise 3 bis 24 Stunden gealtert, der resultierende Niederschlag, vorzugsweise durch Zentrifugieren, isoliert und mehrfach mit entionisiertem Wasser gewaschen. Danach wird aus dem gereinigten Niederschlag mit Wasser eine Suspension der mit den einfach geladenen organischen Anionen (OA) modifierten positiv geladenen Teilchen (AT) mit einem Festkörpergehalt von 5 bis 50 Gew.-%, vorzugsweise von 10 bis 40 Gew.-%, eingestellt.
Die solchermaßen hergestellten Suspensionen der modifizierten positiv geladenen anorganischen Teilchen (AT) können im erfindungsgemäßen Verfahren zur Herstellung des Beschichtungsmittels prinzipiell während jeder Phase eingearbeitet werden, das heißt vor, während und/oder nach der Zugabe der übrigen Komponenten des Beschichtungsmittels.
Die Kristallinität der erhaltenen schichtförmigen doppelten gemischten Hydroxide als modifizierte positiv geladene anorganische Teilchen (AT), die in der Regel nicht als individuelle Schichten sondern als Schichtenstapel erhalten und eingesetzt werden, ist abhängig von den gewählten Syntheseparametern, der Art der eingesetzten Kationen, dem Verhältnis der M²⁺/M³⁺ Kationen sowie der Art und der Menge der eingesetzten Anionen und sollte möglichst große Werte annehmen.
Die Kristallinität der gemischten Hydroxidphase kann als berechnete Größe der kohärenten Streudomänen aus der Analyse der entsprechenden Röntgenbeugungslinien ausgedrückt werden, zum Beispiel die Reflexe [003] und [110] im Falle des Mg-Al-basierten gemischten doppelten Hydroxids. So zeigen beispielsweise Eliseev et.al. den Einfluss der thermischen Alterung auf das Anwachsen der Domänengröße des untersuchten Mg-Al-basierten gemischten doppelten Hydroxids und erklären dieses mit dem fortschreitenden Einbau noch vorhandenen tetredrisch koordinierten Aluminiums in die gemischte Hydroxidschicht als oktaedrisch koordiniertes Aluminium, nachgewiesen über die relativen Intensitäten der entsprechenden Signale im ²⁷Al - NMR-Spektrum (Doklady Chemistry 387 (2002), 777).

### Weitere Bestandteile der flüssigkristallinen wäßrigen Zubereitungen (WZ)

Weiterhin kann die flüssigkristalline wäßrige Zubereitung (WZ) lackübliche Additive in wirksamen Mengen enthalten. So können in den flüssigkristallinen wäßrigen Zubereitungen (WZ) neben den bevorzugten anorganischen Teilchen (AT), den bevorzugten Polyestern (PES) und den filmbildenden Polymerisaten (FP), insbesondere den wasserdispergiergierbaren Polyurethanen (PUR), insbesondere wassermischbare oder wasserlösliche Lösungsmittel in Anteilen von bis zu 30 Gew.-%, vorzugsweise von bis 30 Gew.-%, besonders bevorzugt von bis zu 20 Gew.-%, bezogen auf die nichtflüchtigen Anteile von (WZ), enthalten sein. Weitere Beispiele geeigneter Lackadditive sind beispielsweise im Lehrbuch "Lackadditive" von Johan Bieleman, Verlag Wiley-VCH, Weinheim, New York, 1998, beschrieben.

### Die Herstellung der flüssigkristallinen wäßrigen Zubereitungen (WZ)

Vorzugsweise werden die flüssigkristallinen wäßrigen Zubereitungen (WZ) hergestellt, indem zunächst alle Bestandteile der Zubereitung außer den modifizierten elektrisch geladenen anorganischen Teilchen (AT) gemischt werden. In die resultierende Mischung werden die modifizierten positiv geladenen anorganischen Teilchen (AT) oder bevorzugt die vorzugsweise nach oben angeführtem Verfahren hergestellte Suspension der modifizierten elektrisch geladenen anorganischen Teilchen (AT) unter Rühren eingetragen, bevorzugt bis die Suspension gleichmäßig dispergiert ist, was durch optische Methoden, insbesondere durch visuelle Begutachtung, verfolgt wird.
Die resultierende Mischung wird vorzugsweise bei Temperaturen zwischen 10 und 50 Grad C, bevorzugt bei Raumtemperatur, während eines Zeitraums von 2 bis 30 Minuten, vorzugsweise von 5 bis 20 Minuten, unter Rühren mit Ultraschall zur Erzielung einer feinteiligeren, homogeneren Dispergierung der Präparation der anorganischen Teilchen AT behandelt, wobei in einer besonders bevorzugten Ausführungsform die Spitze einer Ultraschallquelle in die Mischung getaucht wird. Während der Ultraschall-Behandlung kann die Temperatur der Mischung um 10 bis 60 K ansteigen. Die solchermaßen erhaltene Dispersion wird vorzugsweise mindestens 12 Stunden unter Rühren bei Raumtemperatur gealtert. Hiernach wird die Dispersion vorzugsweise mit Wasser auf einen Festkörpergehalt von 10 bis 70 Gew.-%, vorzugsweise 15 bis 60 Gew.-% eingestellt.

### Die Eigenschaften der flüssigkristallinen wäßrigen Zubereitungen (WZ)

Die Zubereitungen (WZ) weisen flüssigkristalline Eigenschaften auf. Insbesondere zeigen sie unter gekreuzten Polarisatoren eine doppelbrechende Phase, die in Abhängigkeit von der Konzentration der erfindungsgemässen Komponente (AT) neben einer isotropen Phase vorliegen kann. Die Textur der doppelbrechenden Phase gleicht in hohem Maße solchen, wie sie nematischen Phasen zugeschrieben werden.
Mittels Ultra-Kleinwinkel-Röntgenstreuung an den erfindungsgemäßen wäßrigen Zubereitungen sowie durch rasterelekronenmikroskopische Abbildungen von Kryo-Brüchen (Kryo-REM) können die typischen lamellaren Schichtstrukturen abgebildet beziehungsweise hinsichtlich ihrer mittleren Schichtabstände aus den Intensitätsmaxima 1. Ordnung charakterisiert werden.

### Das filmbildende wasserdispergierbare Polymerisat (FP)

Der erfindungsgemäße Effektwasserbasislack enthält neben der flüssigkristallinen wäßrigen Zubereitung (WZ) als weiteren Bestandteil bevorzugt 5 bis 80 Gew.-%, besonders bevorzugt 10 bis 60 Gew.%, bezogen auf die nichtflüchtigen Anteile des Effektwasserbasislacks, eines wasserdispergierbaren filmbildenden Polymerisats (FP). Solche wasserdispergierbaren filmbildenden Polymerisate sind beispielsweise in WO-A-02/053658 beschrieben, wobei in der vorliegenden Erfindung bevorzugt filmbildende Polymerisate (FP) aus der Gruppe der wasserdispergierbaren Polyester, welche sich von den vorbeschriebenen Polyestern (PES) unterscheiden, der wasserdispergierbaren Polyacrylate, der wasserdispergierbaren Polyurethane und/oder der wasserdispergierbaren acrylierten Polyurethane zum Einsatz kommen.
In einer bevorzugten Ausführungsform der Erfindung enthält das wasserdispergierbare filmbildende Polymerisat (FP) mindestens ein wasserdispergierbares Polyurethan (PUR), welches besonders bevorzugt mindestens einen Polyesterbaustein (PESB) mit den vorbeschriebenen difunktionellen Monomereinheiten (DME) in Anteilen von 1 bis 40 mol-% ,bevorzugt von 2 bis 35 mol-%, besonders bevorzugt von 5 bis 30 mol-%, bezogen auf die Gesamtheit der Bausteine des Polyesterbausteins (PESB), enthält.
Im Sinne der Erfindung wasserdispergierbar bedeutet, daß das Polyurethan (PUR) in der wäßrigen Phase Aggregate mit einem mittleren Teilchendurchmesser von < 500, bevorzugt < 200 und besonders bevorzugt < 100 nm ausbilden, beziehungsweise molekulardispers gelöst sind. Die Größe der Aggregate bestehend aus dem Polyurethan (PUR) kann in an sich bekannter Weise durch Einführung von hydrophilen Gruppen am Polyurethan (PUR) gesteuert werden.
In das wasserdispergierbare Polyurethan (PUR) sind die vorzugsweise zur Anionenbildung befähigte Gruppen eingebaut, welche nach ihrer Neutralisation dafür sorgen, daß das Polyurethan (PUR) in Wasser stabil dispergiert werden können. Geeignete zur Anionenbildung befähigte Gruppen sind vorzugsweise Carbonsäuregruppen. Zur Neutralisation der zur Anionenbildung befähigten Gruppen werden bevorzugt ebenfalls Ammoniak, Amine und/oder Aminoalkohole eingesetzt, wie beispielsweise Di- und Triethylamin, Dimethylaminoethanolamin, Diisopropanolamin, Morpholine und/oder N-Alkylmorpholine.
Die difunktionellen Monomereinheiten (DME) des Polyesterbausteins (PESB) des Polyurethans (PUR) weisen aliphatische Spacergruppen (SP) mit 12 bis 70 Kohlenstoffatomen zwischen den funktionellen Gruppen (Gr) auf. Bevorzugte Spacergruppen (SP) und Monomereinheiten (DME) des Polyesterbausteins (PESB) sind in der Beschreibung des wasserdispergierbaren Polyesters (PES) dargestellt.
Ganz besonders bevorzugt als Monomereinheiten (DME) des Polyesterbausteins (PESB) sind dimere Fettalkohole und/oder dimere olefinisch ungesättigte Fettsäuren und/oder deren hydrierte Derivate, die den vorgenannten Kriterien genügen, wie insbesondere dimere Fettsäuren der Pripol®-Serie der Fa. Unichema.
Als weitere Bausteine enthält der bevorzugte Polyesterbaustein (PESB) des Polyurethans (PUR), gegebenenfalls neben weiteren Monomereinheiten, bevorzugt folgende Monomereinheiten (MEnn):
In Anteilen von 1 bis 80 mol-%, bevorzugt von 2 bis 75 mol-%, besonders bevorzugt von 5 bis 70 mol-%, bezogen auf die Gesamtheit der Bausteine des Polyesterbausteins (PESB), unverzweigte aliphatische und/oder cycloaliphatische Diole (ME11) mit 2 bis 12 Kohlenstoffatomen, wie insbesondere Ethylenglykol, Diethylenglykol, 1,3-Propandiol, Dipropylenglykol, 1,4-Butandiol, 1,6-Hexandiol,1,4-Cyclohexandiol und/oder 1,4-Dimethylolcyclohexan, besonders bevorzugt 1,4-Butandiol und/oder 1,6-Hexandiol. Unverzweigt in Sinne der Erfindung bedeutet, daß die aliphatischen und/oder Kohlenstoffeinheiten keine weiteren aliphatischen Substituenten aufweisen.
In Anteilen von 1 bis 40 mol-%, bevorzugt von 2 bis 35 mol-%, besonders bevorzugt von 5 bis 30 mol-%, bezogen auf die Gesamtheit der Bausteine des Polyesterbausteins (PESB), aliphatische, cycloaliphatische und/oder aromatische Dicarbonsäuren (ME22) mit 4 bis 12 Kohlenstoffatomen, wie insbesondere Oxalsäure, Malonsäure, Bernsteinsäure, Glutarsäure, Adipinsäure, Sebacinsäure, Maleinsäure, Fumarsäure, Isophthalsäure, Terephthalsäure, Orthophthalsäure, Tetrahydrophthalsäure, Hexahydrophthalsäue, 1,2-Cyclohexandisäure, 1,4-Cyclohexandisäure beziehungsweise deren Anhydride, besonders bevorzugt Isophthalsäure.
Die Umsetzung der Monomereinheiten (DME), (ME11), (ME22) und gegebenenfalls weiterer Monomereinheiten erfolgt nach den allgemein gut bekannten Methoden der Polyesterchemie. Die Reaktionstemperatur liegt bevorzugt bei 140 bis 240 Grad C, bevorzugt bei 150 bis 200 Grad C. In bestimmten Fällen ist es zweckmäßig die Veresterungsreaktion zu katalysieren, wobei als Katalysatoren beispielsweise Tetraalkyltitanate, Zink- beziehungsweise Zinnalkoxylate, Dialkylzinnoxide oder organische Salze der Dialkylzinnoxide zum Einsatz kommen.
Die wasserdispergierbaren Polyurethane (PUR) werden bevorzugt aus den Polyesterbausteinen (PESB) sowie gegebenenfalls weiteren niedermolekulare und/oder höhermolekularen Polyolen mit mindestens 2 Hydroxylgruppen pro Polyoleinheit aufgebaut, welche bevorzugt mit Bisisocyanatoverbindungen und/oder deren Gemische und/oder deren dimere, trimere oder tetramere Addukte, wie insbesondere Diurete oder Isocyanurate, wie vorzugsweise Hexamethylendiisocyanat, Isophorondiisocyanat, TMXDI, 4,4'-Methylen-bis-(cyclohexylisocyanat), 4,4'-Methylen-bis-(phenylylisocyanat), 1,3-bis-(1-isocyanato-1-methylethyl)-benzol), besonders bevorzugt Hexamethylendiisocyanat und/oder Isophorondiisocyanat,und zur Anionenbildung befähigte Verbindungen, wie insbesondere 2,2-Bis-(hydroxymethyl)-propionsäure zum Polyurethan umgesetzt werden. Bevorzugt werden die Polyurethane (PUR) durch die anteilige Verwendung von Polyolen, vorzugsweise Triolen, besonders bevorzugt 1,1,1-Tris-(hydroxymethyl)-propan verzweigt aufgebaut. Die Wasserdispergierbarkeit der Polyurethane wird durch Neutralisation der zur Anionenbildung befähigten Gruppen vorzugsweise mit Aminen, besonders bevorzugt mit Diethanolamin erreicht, wobei ein Neutralisationsgrad zwischen 80 und 100 %, bezogen auf die Gesamtheit der neutralisierbaren Gruppen, bevorzugt ist.
In einer weiteren Ausführungsform der Erfindung tragen die filmbildenden Polymerisate (FP), insbesondere die wasserdispergierbaren Polyurethane (PUR) vernetzbare funktionelle Gruppen (a), wie sie schon bei den wasserdispergierbaren Polyestern (PES) beschrieben sind. Besonders bevorzugt sind Hydroxylgruppen, wobei die Hydroxylzahl der filmbildenden Polymerisate (FP) nach DIN EN ISO 4629 vorzugsweise zwischen 0 und 200, bevorzugt zwischen 0 und 100 KOH/g nichtflüchtigem Anteil beträgt, und insbesondere die Hydroxylzahl des wasserdispergierbaren Polyurethans (PUR) nach DIN EN ISO 4629 vorzugsweise zwischen 0 und 50, bevorzugt zwischen 0 und 30 KOH/g nichtflüchtigem Anteil beträgt.

### Die Effektpigmente (EP) des Effektwasserbasislacks

Unter Effektpigmenten (EP) sind alle Pigmente zu verstehen, die einer Oberflächenbeschichtung spezielle dekorative Effekte verleihen. Bei den Effektpigmenten (EP) handelt es sich beispielsweise um alle in der Fahrzeug- und Industrielackierung oder in der Tinten- und Färbemittelherstellung üblicherweise einsetzbaren effektgebenden Pigmente. Beispiele für derartige Effektpigmente (EP) sind reine Metallpigmente wie zum Beispiel Aluminium-, Eisen-, oder Kupferpigmente, Interferenzpigmente wie zum Beispiel titandioxidbeschichteter Glimmer, eisenoxidbeschichteter Glimmer, mischoxidbeschichteter Glimmer, metalloxidbeschichteter Glimmer, oder Flüssigkristallpigmente. Erfindungsgemäß bevorzugt als Effektpigmente (EP) sind plättchenförmige Metallpigmente, bevorzugt Aluminiumpigmente, wie insbesondere Leafing-oder Nonleafing-Pigmente (vergleiche hierzu BASF Handbuch Lackiertechnik, Seiten 164ff, Vincentz-Verlag, Hannover, 2002), und/oder Mica-, Interferenz-und Periglanzpigmente (vergleiche hierzu BASF Handbuch Lackiertechnik, Seiten 165ff, Vincentz-Verlag, Hannover, 2002).
Der Gehalt der Effekt-Pigmente (EP) im erfindungsgemäßen Effektwasserbasislack kann breit variieren und richtet sich zum einen nach dem Deckvermögen des Effektpigments (EP) und nach der Intensität des optischen Effekts den man erzielen will. Vorzugsweise enthält der erfindungsgemäße Effektwasserbasislack 0,1 bis 50 Gew.-%, bezogen auf die nichtflüchtigen Bestandteile des Effektwasserbasislacks, bevorzugt 0,5 bis 40 Gew.-%, besonders bevorzugt 1 bis 30 Gew.-% und ganz besonders bevorzugt 2 bis 25 Gew.-% an Effektpigment (EP) oder Mischungen aus verschiedenen Effektpigmenten (EP).

### Weitere Bestandteile des Effektwasserbasislacks

Weiterhin kann der erfindungsgemäße Wasserbasislack Vernetzungsmittel (V) enthalten, welche mindestens zwei funktionelle Gruppen (b) aufweisen, welche als komplementäre Gruppen mit den funktionellen Gruppen (a) des Polyesters (PES) und/oder des filmbildenden Polymerisats (FP), insbesondere des Polyurethans (PUR), beim Aushärten des Beschichtungsmittels unter Ausbildung kovalenter Bindungen reagieren.
Bevorzugt sind funktionelle komplementäre Gruppen (b) im Vernetzungsmittel (V), die mit den besonders bevorzugten Hydroxylgruppen als funktionelle Gruppen (a) reagieren, wobei (b) vorzugsweise ausgewählt ist aus der Gruppe der der gegebenenfalls blockierten Polyisocyanatgruppen und/oder der Methylolgruppen, die gegebenenfalls teilweise oder vollständig mit Alkoholen verethert sind. Beispiele geeigneter Polyisocyanate und geeigneter methylolgruppenhaltiger Komponenten sind beispielsweise in EP-A-1 192 200 beschrieben.
Außerdem kann die erfindungsgemäße wäßrige Zubereitung außerdem lackübliche Additive in wirksamen Mengen enthalten. So können beispielsweise weitere farbgebende Pigmente sowie übliche Füllstoffe in bekannten Mengen Bestandteil des Beschichtungsmittels sein. Die Pigmente und/oder Füllstoffe können aus organischen oder anorganischen Verbindungen bestehen und sind beispielhaft in der EP-A-1 192 200 aufgeführt. Weitere einsetzbare Additive /sind beispielsweise weitere Bindemittel, wie beispielsweise Polyurethane oder Polyacrylate, insbesondere Polyurethane, UV-Absorber, Radikalfänger, Slipadditive, Polymerisationsinihibitoren, Entschäumer, Emulgatoren, Netzmittel, Verlaufsmittel, filmbildende Hilfsmittel, rheologiesteuernde Additive sowie vorzugsweise Katalysatoren für die Reaktion der funktionellen Gruppen (a), (b) und/oder nachstehend beschriebenen Gruppen (c), und zusätzliche Vernetzungsmittel für die funktionellen Gruppen (a), (b) und/oder (c). Weitere Beispiele geeigneter Lackadditive sind beispielsweise im Lehrbuch "Lackadditive" von Johan Bieleman, Verlag Wiley-VCH, Weinheim, New York, 1998, beschrieben.

### Die Herstellung und Applikation des erfindungsgemäßen Effektwasserbasislacks sowie die Charakterisierung der resultierenden Basislackschichten

Die Herstellung des erfindungsgemäßen Effektwasserbasislacks kann nach allen auf dem Lackgebiet üblichen und bekannten Verfahren in geeigneten Mischaggregaten, wie Rührkessel, Dissolver oder Ultraturrax, erfolgen. Bevorzugt wird die wäßrige Zubereitung (WZ) vorgelegt und das filmbildende wasserdispergierbare Polymerisat (FP), das Effektpigment (EP) sowie gegebenenfalls die vorstehend beschriebenen weiteren Bestandteile unter Rühren zugefügt. Der erfindungsgemäße Effektwasserbasislack wird vorzugsweise mit Wasser auf einen Festkörpergehalt von bevorzugt 5 bis 50 Gew.-% , besonders bevorzugt von 10 bis 45 Gew.-%, insbesondere von 20 bis 40 Gew.-% eingestellt.
Bevorzugt weist der resultierende erfindungsgemäße Effektwasserbasislack, insbesondere die Vorstufe bestehend aus einer Mischung aus der wäßrigen Zubereitung (WZ) und dem filmbildenden Polymerisat (FP) vor Zugabe des Effektpigments (EP), ebenfalls flüssigkristalline Eigenschaften auf.

Die erfindungsgemäßen Effektwasserbasislacke werden für die Ausbildung der Basislackschichten vorzugsweise in einer solchen Naßfilmdicke aufgetragen, daß nach der thermischen Behandlung zur Entfernung der flüchtigen Bestandteile in den resultierenden Schichten eine Trockenschichtdicke zwischen 5 und 50 µm, bevorzugt zwischen 6 und 40 µm, besonders bevorzugt zwischen 7 und 30 µm, insbesondere zwischen 8 und 25 µm vorliegt.
Die Applikation der erfindungsgemäßen Effektwasserbasislacke kann durch übliche Applikationsmethoden, wie beispielsweise Spritzen, Rakeln, Streichen, Gießen, Tauchen oder Walzen erfolgen. Werden Spritzapplikationsmethoden angewandt, sind Druckluftspritzen, Airless-Spritzen, Hochrotations-Spritzen und elektrostatischer Sprühauftrag (ESTA) bevorzugt.
Die Applikation der erfindungsgemäßen Effektwasserbasislacke wird in der Regel bei Temperaturen von maximal 70 bis 80 Grad C durchgeführt, so daß geeignete Applikationsviskositäten erreicht werden können, ohne daß bei der kurzzeitig einwirkenden thermischen Belastung eine Veränderung oder Schädigung des Beschichtungsmittels sowie seines gegebenenfalls wiederaufzubereitenden Oversprays eintritt.
Die bevorzugte thermische Behandlung der applizierten Schicht aus dem erfindungsgemäßen Effektwasserbasislack erfolgt nach den bekannten Methoden, wie beispielsweise durch Erhitzen in einem Umluftofen oder durch Bestrahlen mit Infrarot-Lampen. Vorteilhafterweise erfolgt die thermische Härtung bei Temperaturen zwischen 80 und 180 Grad C, bevorzugt zwischen 100 und 160 Grad C, während einer Zeit zwischen 1 Minute und 2 Stunden, bevorzugt zwischen 2 Minuten und 1 Stunde, besonders bevorzugt zwischen 10 und 45 Minuten. Werden Substrate, wie beispielsweise Metalle, verwendet, die thermisch stark belastbar sind, kann die thermische Behandlung auch bei Temperaturen oberhalb von 180 Grad C durchgeführt werden. Im allgemeinen empfiehlt es sich aber, Temperaturen von 160 bis 180 Grad C nicht zu überschreiten. Werden hingegen Substrate, wie beispielsweise Kunststoffe, verwendet, die thermisch nur bis zu einer Höchstgrenze belastbar sind, ist die Temperatur und die benötigte Zeit für den Härtungsvorgang auf diese Höchstgrenze abzustimmen. Die thermische Härtung kann nach einer gewissen Ruhezeit von 30 Sekunden bis 2 Stunden, vorzugsweise von 1 Minute bis 1 Stunde, insbesondere von 2 bis 30 Minuten erfolgen. Die Ruhezeit dient insbesondere zum Verlauf und zur Entgasung der applizierten Basislackschichten oder zum Verdunsten von flüchtigen Bestandteilen, wie Lösemittel oder Wasser. Die Ruhezeit kann durch die Anwendung erhöhter Temperaturen bis 80 Grad C unterstützt und verkürzt werden, sofern hierbei keine Schädigungen oder Veränderungen der applizierten Schichten eintreten, wie etwa eine vorzeitige vollständige Vernetzung.

Der erfindungsgemäße Effektwasserbasislack ist für zahlreiche Anwendungen auf den Gebieten der Automobilserienlackierung, der Autoreparaturlackierung, und der industriellen Lackierung, insbesondere der Metallbandbeschichtung (Coil Coating), geeignet.
Das erfindungsgemäße Effektwasserbasislack wird bevorzugt als Basislackschicht in OEM-Schichtaufbauten auf metallischen Substraten und/oder Kunststoffsubstraten eingesetzt, die bei Metallsubstraten von Substrat her gesehen aus einer elektrolytisch abgeschiedenen Korrosionsschutzschicht, vorzugsweise einer kathodisch abgeschiedenen Schicht, aus einer darauf applizierten Füllerschicht und einer auf der Füllerschicht applizierten Decklackschicht, welche vorzugsweise aus dem erfindungsgemäßen Effektwasserbasislack und einem abschließenden Klarlack aufgebaut ist, bestehen. Dabei wird vorzugsweise der Elektrotauchlack, insbesondere der kathodische Tauchlack, vor Auftrag des Füllers ausgehärtet. In einem anschließenden Schritt wird der Füller aufgetragen und die gebildete Füllerschicht vorzugsweise ausgehärtet. Hiernach wird in zwei weiteren Stufen zunächst der erfindungsgemäße Effektwasserbasislack und abschließend ein Klarlack aufgetragen. Dabei wird in einem bevorzugten Verfahren in einem ersten Schritt der erfindungsgemäße Effektwasserbasislack aufgetragen und während einer Zeit zwischen 1 bis 30 Minuten, vorzugsweise zwischen 2 und 25 Minuten, bei Temperaturen zwischen 20 und 90 Grad C, vorzugsweise zwischen Raumtemperatur und 85 Grad C abgelüftet und in einem anschließenden Schritt mit einem Klarlack, vorzugsweise einem Zweikomponenten-Klarlack, überschichtet, wobei Basislack und Klarlack gemeinsam ausgehärtet werden.
In einer weiteren Ausführungsform der Erfindung wird die Füllerschicht vor Auftrag der Schicht aus dem erfindungsgemäße Effektwasserbasislack während einer Zeit zwischen 1 bis 30 Minuten, vorzugsweise zwischen 2 und 20 Minuten, bei Temperaturen zwischen 40 und 90 Grad C, vorzugsweise zwischen 50 und 85 Grad C abgelüftet. Hiernach werden Füllerschicht, Basislackschicht und Klarlackschicht gemeinsam ausgehärtet.

Die solchermaßen hergestellten OEM-Schichtaufbauten zeigen eine deutlich erhöhtes winkelabhängiges Reflektionsverhalten (Helligkeit) der Basislackschicht im Vergleich zu OEM-Schichtaufbauten mit Smectit-haltigen Basislacken. Hierbei wird die Helligkeit L* winkelabhängig mit einem Spektralphotometer bestimmt. Das Verhältnis der Helligkeit bei kleinem Betrachtungswinkel zu derjenigen bei großem Betrachtungswinkel (Flop) weist Werte auf, die den hervorragenden Werten der Smectit-haltigen Basislacke entsprechen. Neben diesen herausragenden Eigenschaften weisen die mit den erfindungsgemäße Effektwasserbasislacken hergestellten Beschichtungen eine ausgezeichnete Schwitzwasserbeständigkeit, eine ausgezeichnete Haftung zur Füllerschicht und insbesondere zur Klarlackschicht sowie eine ausgezeichnete Stabilität der Eigenfarbe nach dem Aushärten auf. Weiterhin sind mit dem erfindungsgemäße Effektwasserbasislack Beschichtungen mit vergleichsweise niedriger Einbrenntemperatur und gutem Decklackstand realisierbar.

Die folgenden Beispiele sollen die Erfindung veranschaulichen.

### Beispiele

### Beispiel 1: Synthese einer wäßrigen Dispersion eines erfindungsgemäßen Polyesters (PES)

In einen Reaktor mit Ankerrührer, Stickstoffeinlass, Rückflußkühler und Destillationsbrücke werden 10,511 g 1,6-Hexandiol, 9,977 2,2-Dimethyl-1,3-propandiol, 6,329 g Cyclohexan-1,2-dicarbonsäureanhdrid, 23,410 g dimere Fettsäure (Pripol^{®}1012, Firma Unichema, Dimerengehalt mindestens 97 Gew.-%, Trimerengehalt höchstens 1 Gew.-%, Monomerengehalt höchstens Spuren) und 0,806 g Cyclohexan eingebracht. Der Reaktorinhalt wird in einer Stickstoffatmosphäre unter Rühren solange auf 220 Grad C erhitzt bis die Reaktionsmischung eine Säurezahl nach DIN EN ISO 3682 von 8 bis 12 mg KOH/g nichtflüchtigen Anteil und eine Viskosität von 3,7 bis 4,2 dPas (gemessen als 80 Gew.-%-Lösung der Reaktionsmischung in 2-Butoxyethanol bei 23 Grad C in einem Kegel-Platte-Viskosimeter der Fa. ICI) aufweist. Danach wird das Cyclohexan abdestilliert und die Reaktionsmischung auf 160 Grad C abgekühlt.
Hiernach werden zu der Reaktionsmischung 10,511 1,2,4-Benzoltricarbonsäureanhydrid zugefügt, auf 160 Grad C aufgeheizt und bei dieser Temperatur solange gehalten bis der resultierende Polyester eine Säurezahl nach DIN EN ISO 3682 von 38 mg KOH/g nichtflüchtigen Anteil, eine Hydroxylzahl nach DIN EN ISO 4629 von 81 mg KOH/g nichtflüchtigen Anteil, ein gewichtsmittleres Molekulargewicht Mw von etwa 19.000 Dalton (bestimmt mittels Gelpermeationschromatographie nach den Normen DIN 55672-1 bis -3 mit Polystyrol als Standard) und eine Viskosität von 5,0 bis 5,5 dPas (gemessen als 50 Gew.-%-Lösung der Reaktionsmischung in 2-Butoxyethanol bei 23 Grad C in einem Kegel-Platte-Viskosimeter der Fa. ICI) aufweist.
Die Reaktionsmischung wird auf 130 Grad C abgekühlt und es werden 2,369 g N,N-Dimethylamino-2-ethanol zugefügt. Nach einer weiteren Abkühlung auf 95 Grad C werden 17,041 entionisiertes Wasser und 19,046 2-Butoxyethanol zugefügt. Die resultierende Dispersion wird durch Zugabe von weiterem N,N-Dimethylamino-2-ethanol und entionisiertem Wasser auf einen pH-Wert von 7,4 bis 7,8 und einen nichtflüchtigen Anteil von 60 Gew.-% eingestellt.

### Beispiel 2: Synthese einer wäßrigen Dispersion eines erfindungsgemäßen Polyurethans (PUR)

In einen Reaktor mit Ankerrührer, Stickstoffeinlass, Rückflußkühler und Destillationsbrücke werden 30 g 1,6-Hexandiol, 16 g Benzol-1,3-dicarbonsäure, 54 g oligomere Fettsäure (Pripol^{®}1012, Firma Uniqema, Dimerengehalt mindestens 97 Gew.-%, Trimerengehalt höchstens 1 Gew.-%, Monomerengehalt höchstens Spuren) und 0,9 g Xylol eingebracht. Der Reaktorinhalt wird in einer Stickstoffatmosphäre unter Rühren solange auf 230 Grad C erhitzt bis die Reaktionsmischung eine Säurezahl nach DIN EN ISO 3682 von weniger als 4 mg KOH/g nichtflüchtigen Anteil und eine Viskosität von 11 bis 17 dPas (gemessen bei 50 Grad C in einem Kegel-Platte-Viskosimeter der Fa. ICI) aufweist. Die resultierende Polyester-Lösung weist einen nichtflüchtigen Anteil von 73 Gew.-% auf.
In einen weiteren Reaktor mit Ankerrührer, Stickstoffeinlass, Rückflußkühler und Destillationsbrücke werden 21,007 g der vorbeschriebenen Polyester-Lösung, 0,205 g 2,2-Dimethyl-1,3-propandiol, 1,252 g 2,2-Bis-(hydroxymethyl)-Propionsäure, 5,745 g 2-Butanon und 5,745 g 3-Isocyanatomethyl-3,3,5-trimethylcyclohexylisocyanat eingebracht. Der Reaktorinhalt wird in einer Stickstoffatmosphäre unter Rühren solange auf 82 Grad C erhitzt bis die Reaktionsmischung als 2:1-Verdünnung in N-Methylpyrrolidon einen Isocyanatgehalt von 0,8 bis 1,1 Gew.-% und eine Viskosität von 5 bis 7 dPas (gemessen bei 23 Grad C in einem Kegel-Platte-Viskosimeter der Fa. ICI) aufweist. Hiernach werden zu der Reaktionsmischung 0,554 g 1,1,1-Tris-(hydroxymethyl)propan zugefügt, auf 82 Grad C aufgeheizt und bei dieser Temperatur solange gehalten bis die Reaktionsmischung als 1:1-Verdünnung in N-Methylpyrrolidon einen Isocyanatgehalt von weniger als 0,3 Gew.-% und eine Viskosität von 12 bis 13 dPas (gemessen bei 23 Grad C in einem Kegel-Platte-Viskosimeter der Fa. ICI) aufweist.
Die Reaktionsmischung wird mit 5,365 g 2-Butoxyethanol verdünnt und es werden 0,639 g N,N-Dimethylamino-2-ethanol zugefügt. Die resultierende Mischung wird in 60 g entionisiertes Wasser eingetragen, wobei die Temperatur bei 80 Grad C gehalten wird. Hiernach wird das 2-Butoxyethanol bis zu einem Restgehalt von weniger als 0,25 Gew.%, bezogen auf die Reaktionsmischung, abdestilliert. Die resultierende Dispersion wird durch Zugabe von weiterem N,N-Dimethylamino-2-ethanol und entionisiertem Wasser auf einen pH-Wert von 7,2 bis 7,4 und einen nichtflüchtigen Anteil von 27 Gew.-% eingestellt .

### Beispiel 3: Synthese und Modifizierung von Hydrotalcit

Einer 0,21-molaren wäßrigen Lösung von 4-Aminobenzolsulfonsäure (4-absa) wird eine wäßrige Mischung aus ZnCl₂·6H₂O (0,52-molar) und AlCl₃·6H₂O (0,26-molar) bei Raumtemperatur unter Stickstoffatmosphäre und ständigem Rühren über 3 Stunden zugegeben. Dabei wird der pH-Wert durch Zugabe einer 3-molaren NaOH-Lösung konstant bei pH = 9 gehalten. Nach Zugabe der wäßrigen Mischung der Metallsalze wird die resultierende Suspension bei Raumtemperatur 3 Stunden gealtert. Der resultierende Niederschlag wird durch Zentrifugieren isoliert und 4 Mal mit entionisiertem Wasser gewaschen.
Die resultierende Suspension des weißen Reaktionsprodukts Zn₂Al(OH)₆(4-absa) 2H₂O (LDH-Suspension) hat einen Festkörpergehalt von 27,1 Gew.-% und einen pH-Wert von 9.

### Beispiel 4: Formulierung der Vorstufe für den erfindungsgemäßen Effektwasserbasislack

Zur Herstellung der flüssigkristallinen wäßrigen Zubereitung (WZ) werden13,5 g der gemäß Herstellbeispiel 3 hergestellten Hydrotalcit-Suspension unter Rühren in eine Mischung aus 15,0 g der wäßrigen Polyester-Dispersion (PES) gemäß Herstellbeispiel 1, welche mit 9,0 g entionisiertem Wasser verdünnt wurde, bei Raumtemperatur eingetragen und 12 Stunden gerührt. Es resultiert eine zähflüssige weiße Dispersion, die Schlieren aufweist, wie sie häufig bei flüssigkristallinen Zubereitungen beobachtet werden.
Unter gekreuzten Polarisatoren ist eine nematische flüssigkristalline, doppelbrechende Phase neben einer isotropen, nicht doppelbrechenden Phase erkennbar. Die Ultra-Kleinwinkel-Röngtenstreuung zeigt ein Intensitätsmaximum wie es für lamellare Strukturen typisch ist. Das Intensitätsmaximum 1. Ordnung bei einem Streuvektor q ~ 0,085 [1/nm] (für Strahlung mit einer Wellenlänge λ = 1,38 nm, gemessen am Synchrotronstrahlungslabor HASYLAB, DORIS, BW4, DESY, Hamburg) entspricht einem Zwischenschichtabstand von 75 nm.
Hiernach werden der flüssigkristallinen wäßrigen Zubereitung (WZ) 85,0 g der wäßrigen Polyurethandispersion (PUR) gemäß Herstellbeispiel 2 als filmbildendes Polymerisat (FP) unter Rühren zugefügt. Es resultiert eine lagerstabile milchige niedrig viskose Dispersion, welche, jeweils bezogen auf die Dispersion, 7,4 Gew.-% Polyester (PES), 18,7 Gew.-% Polyurethan (PUR), 6,4 Gew.-% 2-Butoxyethanol und 3,0 Gew.-% Hydrotalcit enthält.
Die Kleinwinkel-Röngtenstreuung zeigt Intensitätsmaxima wie sie für lamellare Strukturen typisch sind. Das Intensitätsmaximum 1. Ordnung bei einem Streuvektor q ~ 0,30 [1/nm] (für CuKα-Strahlung mit einer Wellenlänge λ = 0,154 nm) entspricht einem Zwischenschichtabstand von 21 nm. Unter gekreuzten Polarisatoren ist keine doppelbrechende Phase erkennbar. Nach einer Aufheizphase (5 Minuten bei 100 Grad C) des abgedeckten Flüssigkeitsfilms weist die noch stets homogene Phase unter identischen Einstellungen der gekreuzten Polarisationsfilter sowie der Belichtungsparameter eine erhöhte Intensität auf.

### Beispiel 5 (Vergleichsbeispiel): Herstellung einer PES/PUR-Dispersion mit Smectit-Komponente

15,0 g der wäßrigen Polyester-Dispersion (PES) gemäß Herstellbeispiel 1 werden mit 85,0 g der wäßrigen Polyurethandispersion (PUR) gemäß Herstellbeispiel 2 unter Rühren gemischt. Hiernach werden 20,0 g einer Mischung aus 3 Gew.-%, bezogen auf die Mischung, einer synthetischen Smectit-Verbindung (Laponite ® RD der Fa. LaPorte) und 3 Gew.-%, bezogen auf die Mischung, eines Polypropylenglykols (Pluriol P600 der Fa. BASF SE) unter Rühren zugefügt. Es resultiert eine klare strukturlose Dispersion.

### Beispiele 6 und 7 (Vergleichsbeispiel): Herstellung der effektpigmenthaltigen Wasserbasislacke, deren Applikation und deren Eigenschaften

Zur Herstellung der Effektwasserbasislacke gemäß den Beispielen 6 (erfindungsgemäß) und 7 (Vergleichsbeispiel) wird in die Zubereitung (WZ) gemäß Beispiel 4 und in die Dispersionen gemäß Beispiel 5 (Vergleichsbeispiel) 5,0 g eines mit Titandioxid beschichteten Mica-Pigments (Exterior Mearlin Fine Pearl der Fa. BASF SE) eingerührt.

Zur Herstellung der Proben mit einem OEM-Lackaufbau werden vorbehandelte mit einer kathodischen Tauchlackierung versehenen Stahltafeln der Fa. Chemetall eingesetzt (Dicke der Stahltafel: 750 µm, Dicke der kathodischen Tauchlackierung 21 +/- 2 µm).
Diese Stahltafeln werden mit einem handelsüblichen schwarzen Füller (FU 43-9000 der Fa. BASF Coatings AG) lackiert und 20 Minuten bei 145 Grad C ausgehärtet. Die Trockenschichtdicke der resultierenden Füllerschicht beträgt 25 +/- 2 µm.

Auf die mit dem schwarzen Füller beschichteten Stahltafeln werden die Effektasserbasislacke gemäß den Beispielen 6 (erfindungsgemäß) und 7 (Vergleichsbeispiel) durch automatische Sprühapplikation aufgetragen, wobei eine Sprühvorrichtung der Fa. Köhne eingesetzt wird. Die resultierenden Wasserbasislackschichten werden 10 Minuten bei Raumtemperatur abgelüftet und danach 10 Minuten bei 80 Grad C getrocknet. Die Trockenschichtdicke der resultierenden Wasserbasislackschicht beträgt 20 +/- 5 µm.

Auf die mit dem Wasserbasislacken beschichteten Stahltafeln wird ein handelsüblicher 2-Komponenten-Klarlack (FF99-0140 und SC29-0199 der Fa. BASF Coatings AG) durch Sprühapplikation aufgetragen. Die resultierende Klarlackschicht wird 10 Minuten bei Raumtemperatur getrocknet. Anschließend wird 20 Minuten bei 140 Grad C ausgehärtet. Die Trockenschichtdicke der resultierenden Klarlackschicht beträgt 45 +/- 5 µm.

An den solchermaßen beschichteten Stahltafeln werden mit einem Spektralfotometer (MA 68 II der Fa. X-Rite) winkelabhängig bei 5 Beobachtungswinkeln die Helligkeiten L1* bis L*5 bestimmt, wie sie in nachfolgender Tabelle 1 dargestellt sind.

**Tab.1: Helligkeitwerte Ln* für die Schichten aus dem erfindungsgemäßen Effektwasserbasislack gemäß Beispiel 6 und dem Effektwasserbasislack gemäß Beispiel 7 (Vergleich)**

| Beschichtung | gemäß Beispiel 6 | Gemäß Beispiel 7 (Vergleich) |
|---|---|---|
| | Effektwasserbasislack gemäß Beispiel 4 | Effektwasserbasislack gemäß Beispiel 5 (Vergleich) |
| Winkel (Grad) | Helligkeit (L*) | Helligkeit (L*) |
| 15 | 101,8 | 90,7 |
| 25 | 84,6 | 72,4 |
| 45 | 57,7 | 48,0 |
| 75 | 42,6 | 35,1 |
| 115 | 38,6 | 31,6 |

Die Messdaten zeigen eine deutlich verbesserte Helligkeit der Aufbauten mit einer Schicht aus dem erfindungsgemäßen Effektwasserbasislack gemäß Beispiel 6 im Vergleich zu solchen mit einer Schicht aus Smectit-haltigem Wasserbasislack des Standes der Technik gemäß Beispiel 7. Beim Flop-Effekt, dem Verhältnis L*5/L*1 der Helligkeitswerte L5* (bei einem Winkel von 115 Grad) zu L1* (bei einem Winkel von 15 Grad), ist der erfindungsgemäße Effektwasserbasislack gemäß Beispiel 6 dem Smectit-haltigen Wasserbasislack des Standes der Technik gemäß Beispiel 7 ebenbürtig.

## Patentansprüche

1. Effektwasserbasislack, enthaltend
mindestens eine flüssigkristalline wäßrige Zubereitung (WZ) in Anteilen von 1 bis 99 Gew.-%, bezogen auf den Effektwasserbasislack, mindestens ein filmbildendes Polymerisat (FP) und
mindestens ein Effektpigment (EP),
**dadurch gekennzeichnet, daß** die flüssgkristalline wäßrige Zubereitung (WZ)
10 bis 99.9 Gew.-%, bezogen auf die nichtflüchtigen Anteile der wäßrigen Zubereitung (WZ), mindestens eines wasserdispergierbaren Polyesters (PES), bei dessen Herstellung in Anteilen von 7 bis 50 mol-%, bezogen auf die Gesamtheit der Polyesterbausteine, difunktionelle Monomereinheiten (DME) mit aliphatischen Spacergruppen (SP) von 12 bis 70 Kohlenstoffatomen zwischen den funktionellen Gruppen (Gr) eingesetzt werden,
sowie
0,1 bis 30 Gew.-%, bezogen auf die nichtflüchtigen Anteile der wäßrigen Zubereitung (WZ), positiv geladener schichtförmiger anorganischer Teilchen (AT), deren nicht weiter interkalierbare Einzelschichten ein Verhältnis D/d des mittleren Schichtdurchmessers (D) zur mittleren Schichtdicke (d) > 50 beträgt und deren Ladung zumindestens teilweise mit einfach geladenen organischen Anionen (OA) kompensiert wird, enthält.

2. Effektwasserbasislack nach Anspruch 1, **dadurch gekennzeichnet, daß** der wasserdispergierbare Polyester (PES) neben den Monomereinheiten (DME) als weitere Bausteine:
(ME1): 1 bis 40 mol-%, bezogen auf die Gesamtheit der Bausteine des wasserdispergierbaren Polyesters (PES), unverzweigte aliphatische und/oder cycaloaliphatische Diole mit 2 bis 12 Kohlenstoffatomen,
(ME2): 1 bis 50 mol-%, bezogen auf die Gesamtheit der Bausteine des wasserdispergierbaren Polyesters (PES), verzweigte aliphatische und/oder cycaloaliphatische Diole mit 4 bis 12 Kohlertstoffatomen,
(ME3): gegebenenfalls 0 bis 30 mol-%, bezogen auf die Gesamtheit der Bausteine des wasserdispergierbaren Polyesters (PES), verzweigte aliphatische cycaloaliphatische und/oder aromatische Dicarbonsäuren mit 4 bis 12 Kohlenstoffatomen,
und
(ME4): gegebenenfalls 0 bis 40 mol-%, bezogen auf die Gesamtheit der Bausteine des wasserdispergierbaren Polyesters (PES), aliphatische cycaloaliphatische und/oder aromatische Polycaroncarbonsäuren mit mindestens 3 Carbonsäuregruppen,
aufweist.

3. Effektwasserbasislack nach einem der Ansprüche 1 oder 2, **dadurch gekennzeichnet, daß** das filmbildende Polymerisat (FP) mindestens ein wasserdispergierbanes Polyurethan (PUR) enthält, in welches Polyesterbausteine (PESB) eingebaut sind, welche als Bausteine difunktionelle Monomereinheiten (DME) enthalten.

4. Effektwasserbasislack nach einem der Ansprüche 1 bis 3, **dadurch gekennzeichnet, daß** die anorganischen Teilchen (AT) mindestens ein gemischtes Hydroxid der allgemeinen Formel
(M₍₁₋ₓ₎²⁺Mₓ³⁺(OH)₂(A_{x/y}^{y-})·nH₂O
enthalten, wobei M²⁺ zweiwertige Kationen, M³⁺ dreiwertige Kationen und (A) Anionen mit einer Wertigkeit y darstellen und wobei zumindestens ein Teil der Anionen (A) durch einfach geladene organische Anionen (OA) ersetzt ist.

5. Effektwasserbssislack nach Anspruch 4, **dadurch gekennzeichnet, daß** die organischen Anionen (OA) als anionische Gruppen (AG) Carbonsäuregruppen, Sulfonsäuregruppe und/oder Phosphonsäuregruppen aufweisen.

6. Effektwasserbasislack nach einem der Ansprüche 4 oder 5 **dadurch gekennzeichnet, daß** die organischen Anionen (OA) neben den anionischen Gruppen (AG) zusätzliche funktionelle Gruppen (c), ausgewählt aus der Gruppe Hydroxyl-, Epoxy- und/oder Aminogruppen, aufweisen.

7. Verwendung der Effektwasserbasislacke nach einem der Ansprüche 1 bis 6 als Beschichtungsmittel.

8. Verwendung der Effektwasserbasislacke nach einem der Ansprüche 1 bis 6 als Basislack in OEM-Schichtaufbauten.

9. OEM-Schichtaufbau bestehend aus Grundierung, Füiler, Basislack und Klarlack, **dadurch gekennzeichnet, daß** die Basislackschicht mindestens eine Schicht aus dem Effektwasserbasislack nach einem der Ansprüche 1 bis 6 aufweist.

## Claims

1. Aqueous effect basecoat material comprising
at least one liquid-crystalline aqueous preparation (WZ) in fractions of 1% to 99% by weight, based on the aqueous effect basecoat material,
at least one film-forming polymer (FP), and
at least one effect pigment (EP),
**characterized in that** the liquid-crystalline aqueous preparation (WZ) comprises
10% to 99.9% by weight, based on the nonvolatile fractions of the aqueous preparation (WZ), of at least one water-dispersible polyester (PES) which is prepared using, in fractions of 7 to 50 mol%, based on the entirety of the polyester constituent units, difunctional monomer units (DME) having aliphatic spacer groups (SP) of 12 to 70 carbon atoms between the functional groups (Gr),
and also
0.1% to 30% by weight, based on the nonvolatile fractions of the aqueous preparation (WZ), of positively charged inorganic particles (AT) in layer form, whose individual layers that are not further intercalatable have a ratio D/d of the average layer diameter (D) to the average layer thickness (d) > 50 and whose charge is at least partly compensated by singly charged organic anions (OA).

2. Aqueous effect basecoat material according to Claim 1, **characterized in that** the water-dispersible polyester (PES) contains, in addition to the monomer units (DME), as further constituent units:
(ME1): 1 to 40 mol%, based on the entirety of the constituent units of the water-dispersible polyester (PES), unbranched aliphatic and/or cycloaliphatic diols having 2 to 12 carbon atoms,
(ME2): 1 to 50 mol%, based on the entirety of the constituent units of the water-dispersible polyester (PES), of branched aliphatic and/or cycloaliphatic diols having 4 to 12 carbon atoms,
(ME3): optionally 0 to 30 mol%, based on the entirety of the constituent units of the water-dispersible polyester (PES), of branched aliphatic, cycloaliphatic and/or aromatic dicarboxylic acids having 4 to 12 carbon atoms,
and
(ME4): optionally 0 to 40 mol%, based on the entirety of the constituent units of the water-dispersible polyester (PES), of aliphatic, cycloaliphatic and/or aromatic polycarboxylic acids having at least 3 carboxylic acid groups.

3. Aqueous effect basecoat material according to either of Claims 1 and 2, **characterized in that** the film-forming polymer (FP) comprises at least one water-dispersible polyurethane (PUR) incorporating polyester constituent units (PESB) which as constituent units comprise difunctional monomer units (DME).

4. Aqueous effect basecoat material according to any of Claims 1 to 3, **characterized in that** the inorganic particles (AT) comprise at least one mixed hydroxide of the general formula
(M₍₁₋ₓ₎²⁺Mₓ³⁺(OH)₂)(A_{x/y}^{y-})·nH₂O
where M²⁺ represents divalent cations, M³⁺ represents trivalent cations, and (A) represents anions having a valence y, and where at least some of the anions (A) are replaced by singly charged organic anions (OA).

5. Aqueous effect basecoat material according to Claim 4, **characterized in that** the organic anions (OA) contain carboxylic acid groups, sulfonic acid groups and/or phosphonic acid groups as anionic groups (AG).

6. Aqueous effect basecoat material according to either of Claims 4 and 5, **characterized in that** the organic anions (OA) contain, in addition to the anionic groups (AG), additional functional groups (c) selected from the group of hydroxyl, epoxy and/or amino groups.

7. Use of the aqueous effect basecoat materials according to any of Claims 1 to 6 as coating composition.

8. Use of the aqueous effect basecoat materials according to any of Claims 1 to 6 as basecoat in OEM coat systems.

9. OEM coat system consisting of primer coat, surfacer coat, basecoat, and clearcoat, **characterized in that** the basecoat film has at least one coat of the aqueous effect basecoat material according to any of Claims 1 to 6.

## Revendications

1. Laque à base d'eau à effet, contenant :
au moins une préparation aqueuse cristalline liquide (WZ) en proportions de 1 à 99 % en poids, par rapport à la laque à base d'eau à effet,
au moins un polymère filmogène (FP) et
au moins un pigment à effet (EP),
**caractérisée en ce que** la préparation aqueuse cristalline liquide (WZ) contient :
10 à 99,9 % en poids, par rapport aux fractions non volatiles de la préparation aqueuse (WZ), d'au moins un polyester dispersible dans l'eau (PES), lors de la fabrication duquel des unités monomères difonctionnelles (DME) contenant des groupes espaceurs aliphatiques (SP) de 12 à 70 atomes de carbone entre les groupes fonctionnels (Gr) sont utilisées en proportions de 7 à 50 % en moles, par rapport à la totalité des constituants du polyester,
ainsi que
0,1 à 30 % en poids, par rapport aux fractions non volatiles de la préparation aqueuse (WZ), de particules inorganiques chargées positivement en couche (AT), dont les couches individuelles qui ne sont pas davantage intercalables présentent un rapport D/d entre le diamètre de couche moyen (D) et l'épaisseur de couche moyenne (d) > 50 et dont la charge est compensée au moins en partie par des anions organiques à charge simple (OA).

2. Laque à base d'eau à effet selon la revendication 1, **caractérisée en ce que** le polyester dispersible dans l'eau (PES) contient, en plus des unités monomères (DME), en tant que constituants supplémentaires :
(ME1) : 1 à 40 % en moles, par rapport à la totalité des constituants du polyester dispersible dans l'eau (PES), de diols aliphatiques et/ou cycloaliphatiques non ramifiés contenant 2 à 12 atomes de carbone,
(ME2) : 1 à 50 % en moles, par rapport à la totalité des constituants du polyester dispersible dans l'eau (PES), de diols aliphatiques et/ou cycloaliphatiques ramifiés contenant 4 à 12 atomes de carbone,
(ME3) : éventuellement 0 à 30 % en moles, par rapport à la totalité des constituants du polyester dispersible dans l'eau (PES), d'acides dicarboxyliques aliphatiques, cycloaliphatiques et/ou aromatiques ramifiés contenant 4 à 12 atomes de carbone,
et
(ME4) : éventuellement 0 à 40 % en moles, par rapport à la totalité des constituants du polyester dispersible dans l'eau (PES), d'acides polycarboxyliques aliphatiques, cycloaliphatiques et/ou aromatiques contenant au moins 3 groupes acide carboxylique.

3. Laque à base d'eau à effet selon l'une quelconque des revendications 1 ou 2, **caractérisée en ce que** le polymère filmogène (FP) contient au moins un polyuréthane dispersible dans l'eau (PUR), dans lequel des constituants polyester (PESB) sont incorporés, qui contiennent en tant que constituants des unités monomères difonctionnelles (DME).

4. Laque à base d'eau à effet selon l'une quelconque des revendications 1 à 3, **caractérisée en ce que** les particules inorganiques (AT) contiennent au moins un hydroxyde mixte de formule générale
(M₍₁₋ₓ₎²⁺Mₓ³⁺(OH)₂)(A_{x/y}^{y-})·nH₂O
dans laquelle M²⁺ représente des cations bivalents, M³⁺ représente des cations trivalents et (A) représente des anions d'une valence y, au moins une partie des anions (A) étant remplacés par des anions organiques à charge simple (OA).

5. Laque à base d'eau à effet selon la revendication 4, **caractérisée en ce que** les anions organiques (OA) comprennent en tant que groupes anioniques (AG) des groupes acide carboxylique, des groupes acide sulfonique et/ou des groupes acide phosphonique.

6. Laque à base d'eau à effet selon l'une quelconque des revendications 4 ou 5, **caractérisée en ce que** les anions organiques (OA) comprennent, en plus des groupes anioniques (AG), également des groupes fonctionnels (c), choisis dans le groupe des groupes hydroxyle, époxy et/ou amino.

7. Utilisation des laques à base d'eau à effet selon l'une quelconque des revendications 1 à 6 en tant qu'agent de revêtement.

8. Utilisation des laques à base d'eau à effet selon l'une quelconque des revendications 1 à 6 en tant que laque de base dans des structures stratifiées OEM.

9. Structure stratifiée OEM constituée d'une couche primaire, d'une couche de remplissage, d'une laque de base et d'une laque transparente, **caractérisée en ce que** la couche de laque de base comprend au moins une couche de la laque à base d'eau à effet selon l'une quelconque des revendications 1 à 6.
